# EUROPÄISCHE PATENTSCHRIFT

(11) **EP 2 166 631 B1**
(45) Veröffentlichungstag und Bekanntmachung des Hinweises auf die Patenterteilung: **13.08.2014**
(21) Anmeldenummer: 09170906.3
(22) Anmeldetag: 22.09.2009
(51) Int. Cl.: H02G 3/14, H02G 3/08, H02G 3/12

(54) **Deckelsystem zum Verschliessen einer Unterputzdose für elektrische Anschlüsse**
Covering system for closing a built-in socket for electric attachments
Système de couvercle pour la fermeture d'une boîte de branchements pour connexions électriques

(30) Priorität: 22.09.2008 CH 14912008
(43) Veröffentlichungstag der Anmeldung: 24.03.2010
(73) Patentinhaber: Agro AG, 5502 Hunzenschwil (CH)
(72) Erfinder: Rettig, Hans Jörg, 5502, Hunzenschwil (CH); Andermatt, Urs, 5105, Auenstein (CH)
(74) Vertreter: Rentsch Partner AG

(56) Entgegenhaltungen:
- CH-A5- 696 477
- DE-U1- 9 005 252
- DE-U1-202007 012 669
- NL-A- 7 508 484
- US-A- 5 142 102

## Beschreibung

### Technisches Gebiet

Die vorliegende Erfindung bezieht sich auf einen Adapter zum Befestigen eines Deckels an einer Unterputzdose, einen Deckel für eine Unterputzdose, ein Deckelsystem mit einem Adapter und einem Deckel, sowie eine Unterputzdose, gemäss dem Oberbegriff der unabhängigen Patentansprüche.

### Stand der Technik

In Bauwerken werden für das Anbringen elektrischer Schalter, Steckdosen, Lampen, Apparate oder für Verzweigungen an den dazu vorgesehenen Stellen im Gebäude Unterputzdosen einbetoniert, oder versenkt in Mauern, Decken usw. befestigt. Unter Unterputzdosen werden beispielsweise Einlasskästen, Deckendübel, Unterputzabzweigdosen und dergleichen verstanden. Solche Unterputzdosen weisen typischerweise einen zylinder- oder quaderförmigen Anschlussraum auf, welcher über eine Bedienöffnung zugänglich ist. Umfangsseitig weisen sie zudem oft eine Mehrzahl von Muffen und Adaptern auf, welche typischerweise zur Befestigung von Plastikrohren, insbesondere Wellrohren, zur Durchführung von Anschlusskabeln ausgebildet sind. Derartige Muffen sind beispielsweise aus der EP 1737094 A1 bekannt.

Der Einbau einer Unterputzdose in einer Betonmauer oder -decke erfolgt typischerweise vor dem Anbringen vor dem Betonieren der Mauer oder der Decke. Dazu wird die Unterputzdose mit Nägeln derart an einem Schalungselement befestigt, dass ihre Bedienöffnung der Schalung zugewandt ist. Typischerweise wird die Bedienöffnung der Unterputzdose vor dem Befestigen mit einem Deckel abgedeckt, um ein Eindringen von flüssigem Beton zu vermeiden.

Derzeit sind mehrere solche Deckelsysteme bekannt. Nach dem Aushärten des Betons werden die Schalungselemente entfernt, so dass die Bedienöffnung wieder frei zugänglich ist. Beim Ausschalen des Mauerwerks oder der Decke verbleiben die zur Befestigung der Unterputzdose verwendeten Nägel an der Schalung. Dabei reissen die Nägel, deren Köpfe die Unterputzdose vor dem Betonieren in Position gehalten haben, die Unterputzdose entlang vordefinierten Sollbruchstellen auf und werden zusammen mit der Schalung entfernt, während die Unterputzdose formschlüssig gehalten im ausgehärteten Beton verbleibt. Derartige Unterputzdosen sind beispielsweise aus der CH 689528 oder der CH 697323 bekannt.

Nach dem Verputzen oder Bemalen der Wand und dem Fertigstellen der elektrischen Installationen werden die Unterputzdosen mit einem Deckelsystem verschlossen. Der Deckel ist vorzugsweise in einem gewissen Winkelbereich drehbar, um in parallel zu den Wänden ausrichten zu können.

Die CH 696477 offenbart ein Deckelsystem mit einem Deckel, welcher eine schalenförmige Wandung mit einer Aussenseite und eine Innenseite aufweist, an welcher innenseitig ein hülsenartiges Befestigungsteil mit einem dreieckigen Querschnitt angeformt ist. Bei der Montage des Deckels an der Unterputzdose gemäss einer ersten Befestigungsart wird zuerst ein stegartiger Adapter diagonal über die Bedienöffnungen der Unterputzdose gelegt und endseitig mit der Unterputzdose verschraubt. Die Unterputzdose weist dazu in deren Randbereich entsprechende Befestigungsöffnungen in Form von Schraubenlöchern auf. Anschliessend wird das hülsenförmige Befestigungsteil in eine etwa längsmittig im Adapter angeordneten Aufnahmeöffnung gesteckt und solange in Richtung der Bedienöffnung der Unterputzdose gedrückt, bis die Innenseite des Deckels bündig am Mauerwerk oder der Unterputzdose anliegt. Ein radial vorstehende Kante der Aufnahmeöffnung greift dabei in der Art und Weise einer Ratsche formschlüssig in lamellenartige Elemente ein, welche mantelseitig am Befestigungsteil angeordnet sind, um so den Deckel formschlüssig zu fixieren, so dass der Deckel nach dem Ausrichten dauerhaft in der gewünschten Position verbleibt. Die Aufnahmeöffnung ermöglicht eine Korrektur der Ausrichtung des Deckels relativ zur Unterputzdose, indem der Deckel um eine vom hülsenförmigen Befestigungsteil und der Aufnahmeöffnung definierte Längsachse drehbar ist. Beim Entfernen des Deckels ist ein erheblicher Krafteinsatz notwendig, weil die Lamellen des Befestigungsteils und die darin eingreifende Kante der Aufnahmeöffnung elastisch verformt werden müssen.

Bei einer zweiten, alternativen Befestigungsart des gleichen Deckelsystems wird der hülsenförmige Befestigungsteil des Deckels derart auf einen Schraubenkopf einer mittig aus der Unterputzdose ragenden Schraube aufgepresst, dass er auf dem Schraubenkopf festklemmt. Das Ausrichten erfolgt dabei analog zur ersten Befestigungsart. Problematisch bei dieser Art der Befestigung ist die geringe Massgenauigkeit des Durchmessers des Schraubenkopfs, welche zu einem mangelhaften Halt des Deckels führen kann.

Bei einem weiteren Deckelsystem weist der Deckel ebenfalls eine schalenförmige Wandung mit einer Aussenseite und einer Innenseite auf, an welcher ein hülsenförmiges Befestigungsteil angeformt ist. Dieser Deckel wird bei der Montage derart auf einem Schraubenkopf einer aus der Unterputzdose ragenden Schraube aufgepresst, dass das hülsenförmige Befestigungsteil auf dem Schraubenkopf der Schraube festklemmt. Der hülsenförmige Befestigungsteil ist entlang einer vom hülsenförmigen Befestigungsteil definierten Längsachse mehrfach radial geschlitzt. Die dadurch entstandenen zungenartigen Elemente sind an einem der Wandung abgewandten, freien Ende umfangsseitig mit einem Federelement, beispielsweise einem band- oder drahtförmigen Federring zusammengehalten, um zu verhindern, dass die Federelemente beim Aufpressen des hülsenförmigen Befestigungsteils vom Schraubenkopf der Stehschraube nicht wirkungslos weggedrängt werden. Der Deckel dieses Deckelsystems lässt sich wiederum Ausrichten, indem er um die Längsachse drehbar ist. Auch in diesem Fall kann ein zu kleiner Durchmesser des Schraubenkopfs zu einem mangelhaften Halt des Deckels führen.

Die Unterputzdose eines weiteren Befestigungssystems weist im Randbereich der Bedienöffnung in Umfangsrichtung vier in regelmässigem Abstand voneinander angeordnete Befestigungsöffnungen in Form von Halteschlitzen auf. Ein geeigneter Deckel weist wiederum eine schalenförmige Wandung mit einer Aussenseite und einer Innenseite mit typischerweise vier angeformten Befestigungsfingern auf. Die Befestigungsfinger des Deckels greifen form-und/oder kraftschlüssig in die Befestigungsöffnungen ein und sind dementsprechend geformt. Die stegartigen Befestigungsfinger einer ersten Deckelvariante weisen Längsrippen auf, um mit den Innenflächen der Befestigungsöffnungen reibschlüssig zusammenzuwirken. Bei einer anderen Variante ist in jedem Befestigungsfinger eine Befestigungsschraube derart integriert, dass sie in radialer Richtung in die Innenfläche des entsprechenden Halteschlitzes der Unterputzdose eingreift und den Befestigungsfinger im Halteschlitz verklemmt. Beide Deckelvarianten erfordern eine verhältnismässig präzise Positionierung der Unterputzdose vor dem Betonieren, da die Befestigungsfinger in Umfangsrichtung stirnseitig an den Innenflächen der Befestigungsöffnungen der Unterputzdose anstossen und daher lediglich ein sehr beschränktes Ausrichten des Deckels um wenige Grad erlauben.

### Darstellung der Erfindung

Trotz dieser Vielfalt an Deckelsystemen besteht ein Bedarf nach einem praxistauglicheren Deckelsystem. Es ist daher eine Aufgabe der vorliegenden Erfindung, ein Deckelsystem zur Verfügung zu stellen, welches die oben erwähnten und andere Nachteile nicht aufweist. Insbesondere soll ein solches Deckelsystem eine rasche Zugänglichkeit zum Anschlussraum der Unterputzdose gewährleisten. Ebenfalls soll ein erfindungsgemässes Deckelsystem tolerant sein gegenüber Ungenauigkeiten der Montage der Unterputzdose.

Eine andere Aufgabe der Erfindung besteht darin, einen vorteilhaften Adapter und einen vorteilhaften Deckel zur Verwendung in einem Deckelsystem zur Verfügung zu stellen.

Eine weitere Aufgabe besteht in der Weiterentwicklung einer zum Zusammenwirken mit einem erfindungsgemässen Deckelsystem oder einem erfindungsgemässen Adapter geeigneten Unterputzdose.

Diese und andere Aufgaben werden gelöst durch einen erfindungsgemässen Adapter, einen erfindungsgemässen Deckel, ein erfindungsgemässes Deckelsystem, sowie eine erfindungsgemässe Unterputzdose, gemäss den unabhängigen Ansprüchen. Weitere bevorzugte Ausführungsformen sind in den abhängigen Ansprüchen gegeben.

Ein erfindungsgemässer Adapter zum Befestigen eines Deckels an einer Unterputzdose weist einen Quersteg mit endseitigen Befestigungsmitteln und eine im Quersteg angeordneten Aufnahmeöffnung zur Aufnahme eines hülsenförmigen Befestigungsteils eines Deckels auf. Der Quersteg des Adapters umfasst mindestens ein radial mit dem hülsenförmigen Befestigungsteil des Deckels zusammenwirkendes, zungenartiges Federelement, durch welches das hülsenförmige Befestigungsteil reibschlüssig gehalten wird. Dieses mindestens eine Federelement ermöglicht in montiertem Zustand des Deckels eine rasche Zugänglichkeit zum Anschlussraum der Unterputzdose, indem sich das hülsenförmige Befestigungsteil des Deckel von Hand direkt aus der Aufnahmeöffnung des Adapters ziehen lässt. Dabei lässt sich der Deckel von Hand, ohne Werkzeug öffnen, indem ein Bediener einen Rand des typischerweise schalenartigen Deckels fasst und ihn von der Unterputzdose weg zieht, um so den Reibschluss zu überwinden.

Diese werkzeuglose Bedienbarkeit vermindert die Gefahr der Beschädigung des Deckels durch unsachgemässe Anwendung eines Werkzeugs. Weiter wird auch die Betriebssicherheit verbessert, weil ein Bediener nicht abrutschen und so aus Versehen mit leitenden Werkzeugen in Kontakt mit Strom führenden Bauteilen kommen kann. Zudem ist der Anschlussraum der Unterputzdose im Fehlerfall sofort einsehbar, ohne dass vorgängig zum Öffnen des Deckels zeitraubend nach geeigneten Werkzeugen wie Schraubenzieher und dergleichen zum Demontieren des Deckels gesucht werden muss.

Das mindestens eine Federelement dient zur Aufrechterhaltung einer radialen beziehungsweise radial wirkenden Anpresskraft, durch welche das hülsenförmige Befestigungsteil des Deckels im Wesentlichen dauerhaft und sicher am Adapter beziehungsweise der Unterputzdose reibschlüssig gehalten ist.

Je nach Bedarf erstreckt sich das mindestens eine Federelement kreissegmentartig oder kreisringabschnittartig in Umfangsrichtung der Aufnahmeöffnung. Bei zwei oder mehr Federelementen, welche das hülsenförmige Befestigungsteil des Deckels in montiertem Zustand partiell umgreifen, dienen diese Federelemente nebst der Aufrechterhaltung der radialen Anpresskraft zur erleichterten Einführung des hülsenförmige Befestigungsteil bei der Deckelmontage, indem sie das hülsenförmige Befestigungsteil entlang einer von diesem definierten Längsachse führen.

Je nach Bedarf ist das mindestens eine Federmittel in Richtung einer von der Aufnahmeöffnung definierten Achse radial durch mindestens ein Stützmittel stabilisiert, um so die Federkonstante und damit die erreichbare Anpresskraft zu erhöhen Je nach Ausführungsform ist das Stützmittel beispielsweise in Form von lateralen Rippen realisiert, welche ein vom Quersteg abgewandtes, freies Ende des mindestens einen Federelementes gegenüber dem Quersteg des Adapters abstützen. Gleichzeitig sind die Stützmittel derart gestaltbar, dass eine gewünschte Positionsstabilität des zungenartigen Federelements in Umfangsrichtung der Aufnahmeöffnung gewährleistbar ist. Falls die Rippen derart angeordnet sind, dass sie in ebenfalls in Achsrichtung verlaufende Wangen des Quersteges münden, ist eine verhältnismässig steife Abstützung des mindestens einen Federmittels und damit eine verhältnismässig hohe Anpresskraft erzielbar.

Obwohl die Aufnahmeöffnung des Adapters in einer Ausführungsform etwa rechtwinklig zu einer vom Adapter beziehungsweise der Bedienöffnung der Unterputzdose definierten Ebene angeordnet ist, ermöglicht der erfindungsgemässe Adapter einen Ausgleich eines gewissen Winkelfehlers gegenüber der Wandebene. Ein Winkelfehler entsteht beispielsweise dann, wenn nach dem Ausschalen auf einer die Bedienöffnung der Unterputzdose umgebenden Oberfläche (Mauer, Decke) nicht gleichmässig viel Putz aufgetragen wird, so dass die Verputzschicht unterschiedlich dick ist. Dank der Beweglichkeit des mindestens einen Federelements passt sich dieses im montierten Zustand des Deckels teilweise der Achse des hülsenartigen Befestigungselements an.

In einer weiteren Ausführungsform des Adapters weist dieses mindestens eine Ausgleichselement zur Aufnahme von Massabweichungen und/oder Formabweichungen der Unterputzdose und bei Bedarf auch des Adapters selber auf. Das mindestens eine Ausgleichselement ist bevorzugt im Quersteg integriert, vorzugsweise in dessen Wangen. In einer bevorzugten Ausführungsform des Adapters ist das Ausgleichselement als Torsionselement ausgebildet und weist in Längsrichtung zwischen seinen endseitig angeordneten Befestigungsmitteln, beispielsweise in Form von Schraubenlöchern, mindestens eine lokale Verjüngung des Querschnittes des Querstegs zur Aufnahme von Formabweichungen der Unterputzdose beziehungsweise deren Verankerungsmitteln auf. Eine derartige Geometrie ermöglicht eine gezielte Torsion des Querstegs des Adapters, um die Formtoleranzen auszugleichen. In einer Ausführungsform weist der Quersteg beispielsweise einen H-förmigen Querschnitt auf, wobei zwei Wangen einen als Flansch wirkenden Mittelteil des H-förmigen Querschnitts endseitig halten. Die Aufnahme von Massabweichungen der Verankerungsmittel der Unterputzdose durch den Adapter ist beispielsweise durch einen partiellen Unterbruch des Mittelteils des Querstegs erzielbar, so dass der Quersteg in Längsrichtung etwas dehnbar oder stauchbar ist.

Je nach Ausführungsform ist der erfindungsgemässe Adapter ein- oder mehrteilig. Bevorzugt ist der Adapter einteilig ausgeführt und beispielsweise mittels Spritzgiessen aus einem flammwidrigen Material hergestellt. Dadurch ergeben sich Vorteile hinsichtlich der Unverlierbarkeit von Teilen und einem damit verbundenen Sicherheitsaspekt, sowie Vorteilen hinsichtlich der Lagerhaltung beim Händler, auf Baustellen und einer wirtschaftlichen Herstellbarkeit.

Ein erfindungsgemässer Deckel zur Verwendung in einem erfindungsgemässen Deckelsystem umfasst ein hülsenförmiges Befestigungsteil, welches innenseitig an einer schalenartigen Wandung des Deckels angeordnet ist. Das hülsenförmige Befestigungsteil dient zum Verschliessen einer Unterputzdose und weist einen kreisringförmigen Querschnitt auf. Je nach Ausführungsform weist das hülsenförmige Befestigungsteil umfangsseitig eine im Wesentlichen glatte Mantelfläche auf. Eine glatte Mantelfläche bietet insbesondere bei wiederholter Montage und Demontage des Deckels den Vorteil, dass weder das für die Erzeugung und Aufrechterhaltung der Klemmkraft verantwortliche Federelement, noch das hülsenförmige Befestigungsteil einem nennenswerten Verschleiss unterworfen sind, und selbst bei einer nicht optimalen Ausrichtung der Längsachse des hülsenförmigen Befestigungsteil zur Achse der Aufnahmeöffnung des Adapters beim Einführen des hülsenförmigen Befestigungsteil in die Aufnahmeöffnung des Adapters ein sachgerechtes Einführen möglich ist.

In einer vorteilhaften Version des Deckels, welche für eine alternative Befestigungsvariante mit Aufpressen des Befestigungsteils auf einen Kopf einer in einer Unterputzdose angeordneten Stehschraube geeignet ist, ist das hülsenförmige Befestigungsmittel in Längsrichtung an mindestens einer Stelle lokal derart verjüngt ausgestaltet, dass eine Sollbruchstelle und/oder einer Schneidmittelführung gebildet wird. Bei der alternativen Befestigung wird anstelle des Adapters die Stehschraube typischerweise etwa zentrisch im Grund der Unterputzdose eingeschraubt. Ein Innendurchmesser des hülsenförmigen Befestigungsteils misst dabei weniger als ein kleinstmöglicher Aussendurchmesser der Stehschraube. Die mindestens eine lokale Verjüngung des hülsenförmigen Befestigungsteils erleichtert ein Aufpressen des Befestigungselements auf dem Schraubenkopf und gewährleistet, dass der hülsenförmige Befestigungsteil im Wesentlichen dauerhaft am Schraubenkopf festklemmt.

Im Unterschied zu bekannten Deckeln ist mit dem erfindungsgemässen Deckel selbst bei einem Untermass des Schraubenkopfdurchmessers der Stehschraube zuverlässig eine ausreichende, radiale Klemmkraft des hülsenförmigen Befestigungsteils erreichbar. Die Schraubenköpfe unterscheiden sich bezüglich deren Durchmesser beim selben Schraubentyp in der Praxis oft beträchtlich, was bei bekannten Deckelsystemen zu Problemen führte. Eine zu geringe radiale Klemmkraft resultierte in der Praxis bei bekannten Deckelsystemen auch dann, wenn der Deckel wiederholt demontiert und wieder montiert worden ist.

Ist die Verjüngung als Sollbruchstelle ausgeführt, so ist der Deckel ohne vorbereitende Arbeitsschritte direkt auf den Schraubenkopf aufpressbar. Die Sollbruchstelle bricht nur dort auf, wo die radiale, vom Schraubenkopf erzeugte Spannung im hülsenförmigen Befestigungsteil ein vordefinierbares Mass übersteigt und bleibt sonst unversehrt. Falls die mindestens eine lokale Verjüngung als Schneidmittelführung ausgebildet ist, beispielsweise in Form einer Rille, ist das hülsenförmige Befestigungsteil aus einem zäheren Material herstellbar, als wenn die Verjüngung als Sollbruchstelle ausgeführt ist. In einem vorbereitenden Arbeitsschritt trennt ein Monteur die lokale Verjüngung des hülsenförmigen Befestigungsteils vor dem Aufpressen auf den Schraubenkopf mit einem Messer durch.

Falls das hülsenförmige Befestigungsteil mehrere, sich in Achsrichtung erstreckende, rillenartige Verjüngungen aufweist, tritt bei einer Deckelmontage unter Verwendung eines Adapters ein vorteilhafter Rasteffekt ein, wenn die zungenförmigen Federelemente des Adapters ebenfalls durch in Achsrichtung verlaufende Schlitze voneinander getrennt werden. Dieser Effekt lässt sich bei einer entsprechenden Anzahl von Federelementen und Verjüngungen des hülsenförmigen Befestigungsteils beispielsweise nutzen, um einem Monteur eine Ausrichtung einer Deckelkante parallel zu einer Kante der Unterputzdose zu erleichtern, indem für ihn das Erreichen der korrekten Ausrichtung am schalenartigen Teil des Deckels mit dementsprechendem Einrasten fühlbar und/oder allenfalls hörbar ist.

Je nach Einsatz und Bedarf ist der erfindungsgemässe Deckel ein- oder mehrteilig ausgeführt. Bezüglich der Vorteile eines einteiligen Deckels wird auf den einteiligen Adapter hingewiesen. Bei einer zweiteiligen Ausführung des Deckels ist das hülsenförmige Befestigungsteil beispielsweise als Dom mit einem Anschlag ausgeführt, welcher bei der Montage des Deckels durch eine entsprechende Aussparung im schalenartigen Deckelstück schiebbar ist. Diese Ausführungsform eignet sich sowohl für eine Befestigung am Adapter, als auch an einem Schraubenkopf einer in der Unterputzdose verankerten Stehschraube. Ein weiterer Vorteil dieser Ausführungsform liegt darin, dass beim Ausrichten beziehungsweise Nachrichten des Deckelstücks um die Längsachse das hülsenförmige Befestigungsteil in seiner Klemmzone dadurch mechanisch nicht beansprucht ist. Der Anschlag ist in montiertem Zustand des Deckels sichtbar und daher beispielsweise als Dekorknopf ausgeführt. In einer alternativen Variante kann das Befestigungsmittel auch auf der Innenseite des Deckels eingeklinkt werden.

Bei Bedarf weist das hülsenförmige Befestigungsteil eine im Vergleich zur Mantelfläche rauere Innenfläche und/oder umlaufende beziehungsweise in Richtung der Längsachse erstreckende Erhöhungen oder Innenrippen auf. Derartige Strukturen ermöglichen gezielt eine zusätzliche Verbesserung der Klemmeigenschaften des hülsenförmigen Befestigungsteils beim Aufpressen auf den Schraubenkopf.

Ein erfindungsgemässes Deckelsystems umfasst einen Deckel und einen erfindungsgemässen Adapter. Je nach Ausführungsform des Deckelsystems ist der Adapter über eine brechbare, schneidbare oder reissbare Verbindung mit dem Deckel verbunden. Dies bietet nebst Vorteilen hinsichtlich der Lagerhaltung beim Verkäufer und auf Baustellen den weiteren Vorteil, dass der Deckel und der Adapter bis zum Zeitpunkt der Montage als Set zusammengehalten sind. Ein derartiges Set ist beispielsweise als ein einziges Spritzgussteil wirtschaftlich realisierbar. Im Fall einer brechbaren Verbindung ist eine saubere Trennung des Deckels vom Adapter beispielsweise durch Sollbruchstellen realisierbar.

Bei der erfindungsgemässen Unterputzdose wird die Aufgabe dadurch gelöst, dass ihr über eine Bedienöffnung zugänglicher Anschlussraum pyramidenartig abgestuft ist, wobei sich der Anschlussraum von der Bedienöffnung her in die Unterputzdose hinein erstreckt. Bevorzugt ist die Unterputzdose aus einem flammwidrigen Kunststoff mittels Spritzguss hergestellt. Die pyramidenartige Abstufung des Anschlussraumes spiegelt sich in den schalenartigen Seitenwänden der Unterputzdose mit im Wesentlichen konstantem Wandquerschnitt wieder und erlaubt entsprechend einen produktionsfreundlichen Aufbau der dazu notwendigen Spritzwerkzeuges. Der stufenpyramidenartige Anschlussraum begünstigt zudem die Übersichtlichkeit zum Zeitpunkt des Verkabelns der Unterputzdose sowie die Zugänglichkeit zur Innenseite der Muffen mit Werkzeugen, beispielsweise Zangen oder dergleichen.

Bei Bedarf weist die erfindungsgemässe Unterputzdose Haltemittel zur Aufnahme von Nägeln zur Befestigung der Unterputzdose auf einem Schalenelement auf, beispielsweise einen Nagelrechen oder Abstützdome. Die Haltemittel stellen sicher, dass sich die zur Montage der Unterputzdose an einer Schalung benötigten Nägel zu Montagebeginn an oder in der Unterputzdose befinden. Besonders wirtschaftlich sind Haltemittel, welche in herausreissbare Sollbruchstellen der Unterputzdose integriert sind. Geeignete Haltemittel sind beispielsweise in Form von radial inwärts gerichteten Klemmnasen oder durch ein gezieltes Untermass einer Durchgangsöffnung zur Aufnahme eines Schafts der Nägel realisierbar.

Die Unterputzdose weist in einer weiteren Ausführungsform mindestens eine Muffe mit einem Sicherungselement auf, mit welchem ein Wellrohr fixierbar ist. Während herkömmliche Wellrohre mit einem Halteteil einer Muffe gemäss EP 1737094 A1 ausreichend befestigbar sind, zeigte sich in der Praxis, dass mit einer Kunststoff- beziehungsweise Gummischicht ummantelte Wellrohre unter Umständen nicht optimal an der Unterputzdose befestigbar sind. Dieses Problem ist durch eine erfindungsgemässe Unterputzdose lösbar, welche mantelseitig ein zusätzliches Sicherungselement zur Fixierung eines ummantelten Wellrohrs aufweist. Versuche haben gezeigt, dass ein geeignetes Sicherungselement beispielsweise mit einer als Rödellasche bezeichneten, von der Muffe wegweisenden Nase erzielbar ist. Diese Nase dient zur sicheren Verankerung eines bei der Montage um den ummantelten Wellschlauch gewickelten Haltedrahtes. Selbstverständlich ist das Sicherungselement in weiteren Ausführungsformen verschiedenartig ausführbar, beispielsweise hakenartig, ösenartig oder dergleichen. Bevorzugt ist bei allen Ausführungsformen des Sicherungselementes, dass dieses bei einer Nichtbenutzung - etwa im Fall von nicht ummantelten Wellrohren - deren Montierbarkeit nicht behindert. Vorzugsweise ist das Sicherungselement daher umfangsseitig an der Muffe angebracht, bevorzugt in letztere integriert.

Bestimmungsgemäss weist die erfindungsgemässe Unterputzdose geeignete Verankerungsmittel für die Befestigung eines erfindungsgemässen Adapters und/oder einer auf dem Grund des Anschlussraumes eindrehbaren oder einsteckbaren Stehschraube auf. Derartige Verankerungsmittels sind beispielsweise in Form von Schraubenlöchern und/oder Innengewindelöchern realisierbar, welche bedienöffnungsseitig im Randbereich der Unterputzdose angeordnet sind. Andere mögliche Verankerungsmittel Befestigungsöffnungen in Form von Halteschlitzen zur Aufnahme von Befestigungsfingern, welche an einem Adapter angebracht sind.

### Kurze Beschreibung der Zeichnungen

Anhand von Figuren, welche lediglich Ausführungsbeispiele darstellen, wird die Erfindung im Folgenden erläutert. Es zeigen
- Fig. 1: eine Explosionsdarstellung einer Ausführungsform eines Deckelsystem zum Verschliessen einer Unterputzdose mit einem Adapter zur Aufnahme eines hülsenförmigen Befestigungsteils eines Deckels in perspektivischer Darstellung;
- Fig. 2: eine Draufsicht der in Figur 1 gezeigten Explosionsdarstellung;
- Fig. 3: ein Schnittdarstellung entlang der Linie A-A von Figur 2 für eine Deckelbefestigung an einem in Position verschobenen Adapter und einem teilweise eingeschobenen hülsenförmigen Befestigungsteil;
- Fig. 4: eine Schnittdarstellung analog der Figur 3 für eine Deckelbefestigung an einem Schraubenkopf einer Stehschraube mit einem teilweise eingeschobenen hülsenförmigen Befestigungsteil;
- Fig. 5: eine perspektivische Darstellung einer Ausführungsform einer Unterputzdose gemäss Figur 1 mit einem offenem Schutzdeckel;
- Fig. 6: eine Detailansicht der Unterputzdose aus Blickrichtung B in Figur 5; und
- Fig. 7: eine Seitenansicht der in Figur 1 gezeigten Explosionsdarstellung;

### Ausführung der Erfindung

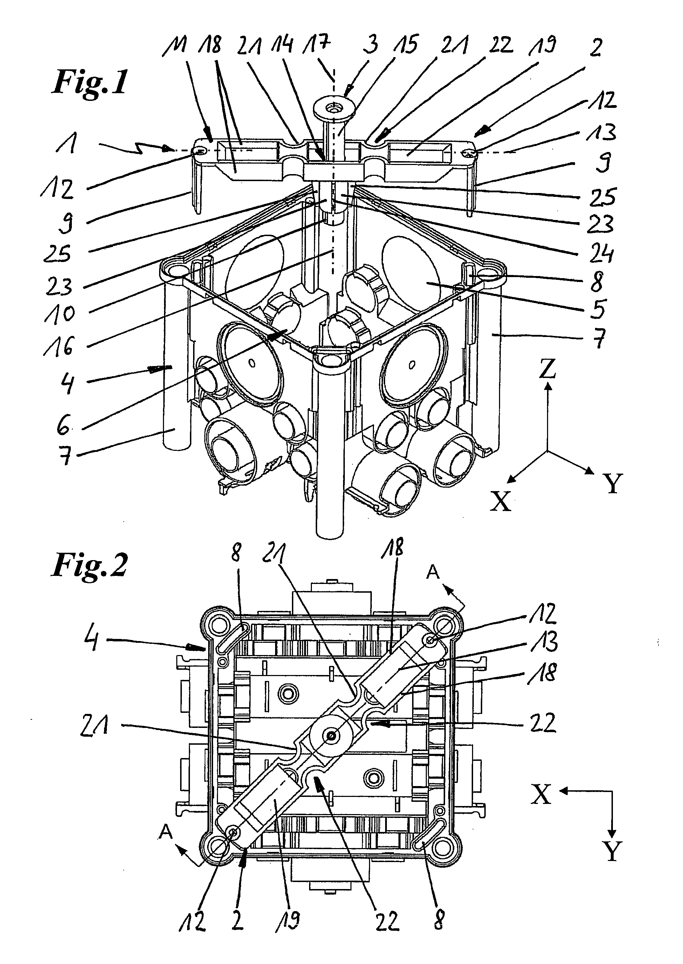

**Figur 1** zeigt in einer Explosionsdarstellung eine erste Ausführungsform des erfindungsgemässen Deckelsystems 1 mit einem erfindungsgemässen Adapter 2 und einem teilweise dargestellten erfindungsgemässen Deckel 3, sowie einer erfindungsgemässen Unterputzdose 4. In Zusammenschau der Figur 1 mit **Figur 2** geht hervor, dass die kastenartige Unterputzdose 4 einen Anschlussraum 5 aufweist, welcher in verbautem Zustand der Unterputzdose 4, beispielsweise in einbetoniertem Zustand, einzig über eine Bedienöffnung 6 der Unterputzdose 4 zugänglich ist. Die einstückige beziehungsweise einteilige Unterputzdose 4 weist eckseitig vier Abstützdome 7 zur Aufnahme von Nägeln (nicht gezeigt) auf. Diese Nägel dienen der Befestigung der Unterputzdose an einem Schalungselement. Die Unterputzdose 4 umfasst weiter im Bereich der Abstützdome 7 bedienöffnungsseitig je eine schlitzförmige Befestigungsöffnung 8 mit einem nierenförmigen Querschnitt, welcher zur Aufnahme eines entsprechend geformten Befestigungsfingers 9 des Adapters 2 dient.

Der brückenartige Adapter 2 überspannt in montiertem Zustand die Bedienöffnung 6 der Unterputzdose 4 in diagonaler Richtung und weist endseitig an einem Quersteg 11 angeordnete Durchgangslöcher 12 zur Aufnahme von Befestigungsschrauben (nicht gezeigt) auf, welche mit den Befestigungsöffnungen 9 der Unterputzdose 4 derart zusammenwirken, dass der Adapter 2 fest an der Unterputzdose 4 fixierbar ist.

Der Adapter 4 definiert durch seine Form eine Querachse 13 und weist etwa längsmittig eine Aufnahmeöffnung 14 zur Aufnahme eines hülsenförmigen Befestigungsteils 15 des Deckels 2 auf. Die Aufnahmeöffnung 14 definiert eine Achse 16, welche in montierten Zustand auf derselben Linie liegt, wie eine durch das hülsenförmige Befestigungsteil definierte Längsachse 17. Das hülsenförmigen Befestigungsteils 15 ist in Figur 1 teilweise in die Aufnahmeöffnung 14 des Adapters 2 eingeschoben dargestellt.

Der Adapter 2 weist entlang der Querachse 13 einen im Wesentlichen H-förmigen Querschnitt auf, wobei die Aussenseiten des H-förmigen Querschnitts durch zwei sich in Richtung der Achse erstreckende Wangen 18 gebildet sind, welche mit einem als Flansch wirkenden Mittelteil 19 des H-förmigen Querschnitts verbunden sind. Der Mittelteil 19 des Querstegs 11 ist bei der Aufnahmeöffnung 14 und bei zwei Ausgleichselementen 21 des Adapters 2 unterbrochen. Ein Ausgleichselement 21 ist dabei durch die beiden lamellenartigen Wangen 18 des Querstegs 11 gebildet, welche im Wesentlichen eine etwa konstante Wandstärke aufweisen und pro Ausgleichselement, in Richtung der Achse 16 gesehen, pro Wange 18 je eine halbkreisförmige Ausnehmung 22 aufweisen, wobei die Ausnehmungen 22 mit deren Scheitelpunkten einander zugewandt sind. Der fehlende Mittelteil 19 im Bereich der Ausgleichselemente 21 ermöglicht eine gewisse Torsion des Querstegs 11, ein Durchbiegen des Querstegs 11 quer zur Querachse 13 in allen Richtungen und eine gewisse Ausdehnung und Stauchung des Querstegs 11 in Richtung der Querachse 13. In der vorliegenden Ausführungsform weist der erfindungsgemässe Adapter 2 in Richtung der Querachse 13 zwei Ausgleichelemente 21 auf, wobei je ein Ausgleichelement 21 pro Hälfte des Quersteges 11 angeordnet ist.

Der erfindungsgemässe Adapter 2 weist zudem zwei zungenartige Federelemente 23 auf, welche sich in Achsrichtung (Z) gesehen beinahe hälftig in Umfangsrichtung um die Aufnahmeöffnung 14 erstrecken und im Wesentlichen einen kreisringabschnittförmigen Querschnitt aufweisen. Die beiden Federelemente 23 sind im Bereich der Wangen 18 durch je einen sich in Achsrichtung erstreckenden Schlitz 24 voneinander getrennt.

Die beiden Federelemente 23 sind in Richtung der Querachse 13 je durch ein Stützmittel 25 in Form einer Rippe 25 form- und lagestabil gehalten. Die Rippen 25 sind durch eine Herstellung des Adapters 2 als einteiliges Spritzgussteil fest mit den zungenartigen Federelementen 23 und dem Mittelteil 19 des Querstegs 11 verbunden.

Die Wandstärken der Rippen 25 und der Federelemente 23 sind dabei derart dimensioniert, dass einerseits eine ausreichende radial inwärts gerichtete Anpresskraft der Federelemente 23 am hülsenförmigen Befestigungsteil 15 des Deckels 3 gewährleistet ist und andererseits trotzdem eine gewisse laterale Verformbarkeit der Federelemente 23 gewährleistet ist, um das Einführen des hülsenförmigen Befestigungsteils 15 in die Aufnahmeöffnung 14 zu erleichtern. Die Anpresskraft ist vorzugsweise so festgelegt, dass sich das hülsenförmige Befestigungsteil 15 des Deckels 3 direkt von Hand und ohne Hilfswerkzeuge aus der Aufnahmeöffnung 14 herausziehen und wieder in diese einführen lässt.

Zur Befestigung des Deckels 2 an der Unterputzdose 4 mit einer anderen als der in Figur 1 gezeigten Befestigungsart weist das hülsenförmige Befestigungsteil 15 eine Verjüngung 10 des kreisringförmigen Querschnitts auf, welche sich längs entlang dem hülsenförmigen Befestigungsteil 15 erstreckt. Diese lokale Verjüngung 10 ist als Schneidmittelführung ausgebildet und dient dem Auftrennen des hülsenförmigen Befestigungsteils 15 vor der eigentlichen Deckelmontage an der Unterputzdose 4.

Aus Gründen der Übersichtlichkeit und zum besseren Verständnis der Funktion und der Geometrie des hülsenförmigen Befestigungsteils 15 wurde in den Figuren 1 und 2 auf eine Darstellung einer schalenartigen Wandung des ebenfalls einteilig spritzgegossenen Deckels 2 zum eigentlichen Verschliessen der Bedienöffnung der Unterputzdose verzichtet.

Aus der Figur 2 geht in Zusammenschau mit der Figur 1 hervor, dass sich der Anschlussraum 5 der Unterputzdose 4 von der Bedienöffnung 6 her in Achsrichtung (Z) in die Unterputzdose 4 hinein erstreckt.

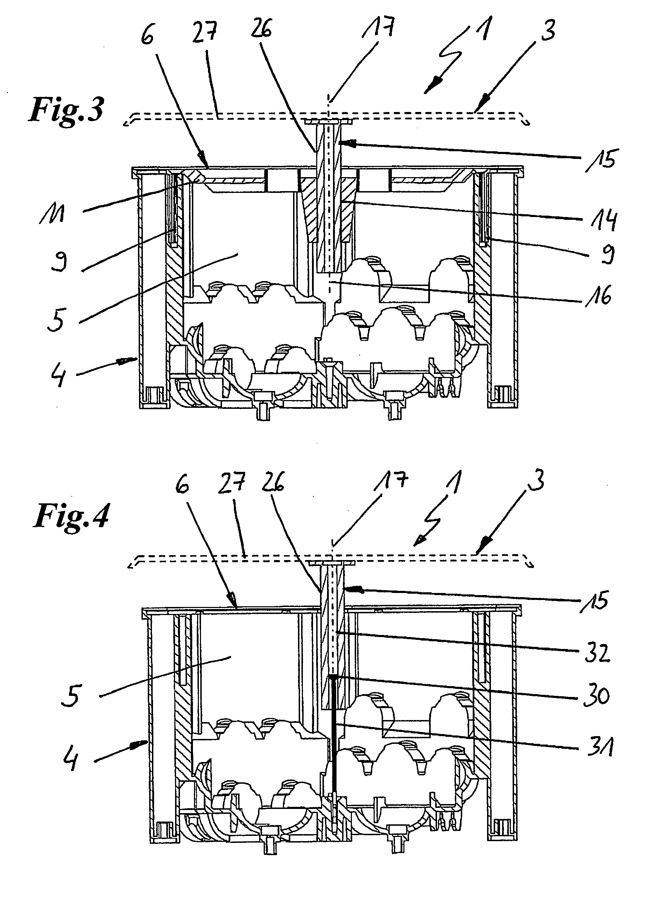

Anhand den **Figuren 3 und 4** sind zwei alternative Befestigungsarten für das erfindungsgemässe Deckelsystem 1 an der erfindungsgemässen Unterputzdose 4 erklärt. Bei einer ersten, in Figur 3 gezeigte Befestigungsart sind die endseitig am Quersteg 11 des Adapters 2 angeformten Befestigungsfinger 9 (siehe auch Figur 1) in entsprechend geformte, im Bereich der Bedienöffnung 6 angeordnete Befestigungsöffnungen 8 der Unterputzdose 4 eingeführt. Dabei sind in der Figur 3 die Befestigungsschrauben, welche in den Befestigungsfingern 9 integriert sind, der verbesserten Übersichtlichkeit halber nicht dargestellt. In einer bevorzugten Ausführungsform sind die Befestigungsfinger 9 und die Befestigungsöffnungen 8 derart ausgestaltet, dass diese reibschlüssig gehalten werden, und auf Befestigungsschrauben verzichtet werden kann.

Das hülsenförmige Befestigungsteil 15 des Deckels 2 ist wiederum erst teilweise in die Aufnahmeöffnung 14 des Adapters 2 eingeführt. Bei dieser Befestigungsart ist der Deckel 2 durch die radial inwärts auf das hülsenförmige Befestigungsteil 15 wirkende Anpresskraft der zungenartigen Federelemente 23 des Adapters 2 zuverlässig an der Unterputzdose 4 reibschlüssig gehalten, so dass eine Mantelfläche 26 des hülsenförmigen Befestigungsteil zumindest partiell druckbelastet ist.

Die schalenartige Wandung 27 des Deckels 2 ist in den Figuren 3 und 4 vereinfacht und lediglich gestrichelt dargestellt. Der besseren Übersichtlichkeit ist ein auf der Innenseite der schalenartigen Wandung angeformtes, rechenartiges Haltemittel zur Aufnahme mindestens einer Stehschraube 31 nicht gezeigt. Das Haltemittel stellt sicher, dass die Stehschraube zum Montage des Deckels stets zusammen mit diesem verfügbar ist.

Im Unterschied zur Figur 3 zeigt die Figur 4 eine Montage des erfindungsgemässen Deckels 2 an einem Schraubenkopf 30 einer etwa zentrisch am Grund des Anschlussraums 5 der Unterputzdose 4 befestigten Stehschraube 31. Bei dieser Befestigungsart ist der Deckel 2 durch die radial auswärts auf das hülsenförmige Befestigungsteil 15 wirkende Druckkraft des Schraubenkopfes 30 zuverlässig an der Unterputzdose 4 reibschlüssig gehalten, so dass eine Innenfläche 32 des hülsenförmigen Befestigungsteil 15 im Bereich des Schraubenkopfes 30 druckbelastet ist.

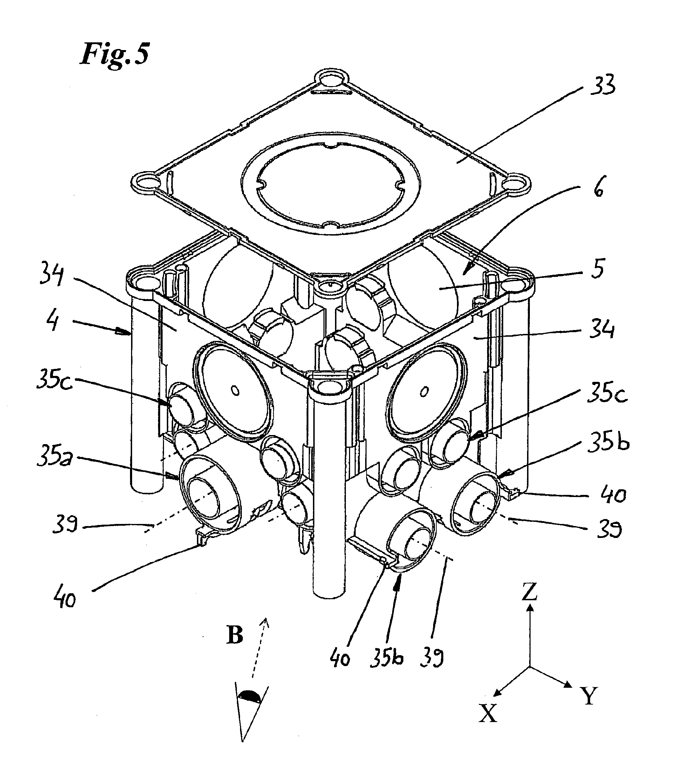

In der **Figur 5** ist die in den Figuren 1 bis 4 gezeigte Unterputzdose 4 und ein Schutzdeckel 33 gezeigt. Der Schutzdeckel 33 wird vor der Befestigung der Unterputzdose 4 auf dieser angebracht und dient als zusätzlicher Schutz, um beim Giessen des Betons ein Eindringen von flüssigem Beton in den Anschlussraum 5 zu verhindern. Aus der Figur 5 geht weiter hervor, dass die kastenartige Unterputzdose 4 im Wesentlichen einen etwa quadratischen Querschnitt aufweist, welcher sich in der X-Y Ebene erstreckt. Selbstverständlich sind auch andere Querschnitte der Anschlussräume denkbar. An jeder der durch den Querschnitt definierten vier Seitenwänden 34 sind eine Vielzahl von Muffen 35a, 35b, 35c zur Aufnahme von Wellrohren (nicht dargestellt) angeordnet. Vor dem Einführen der Wellrohre werden die erforderlichen Durchbrüche 36 für die Wellrohre mittels Eindrücken von entsprechend geformten Sollbruchsstellen 37 erzeugt. Dabei erleichtern beispielsweise Einschlaghülsen 38 oder Schlagsterne den Eindrückvorgang.

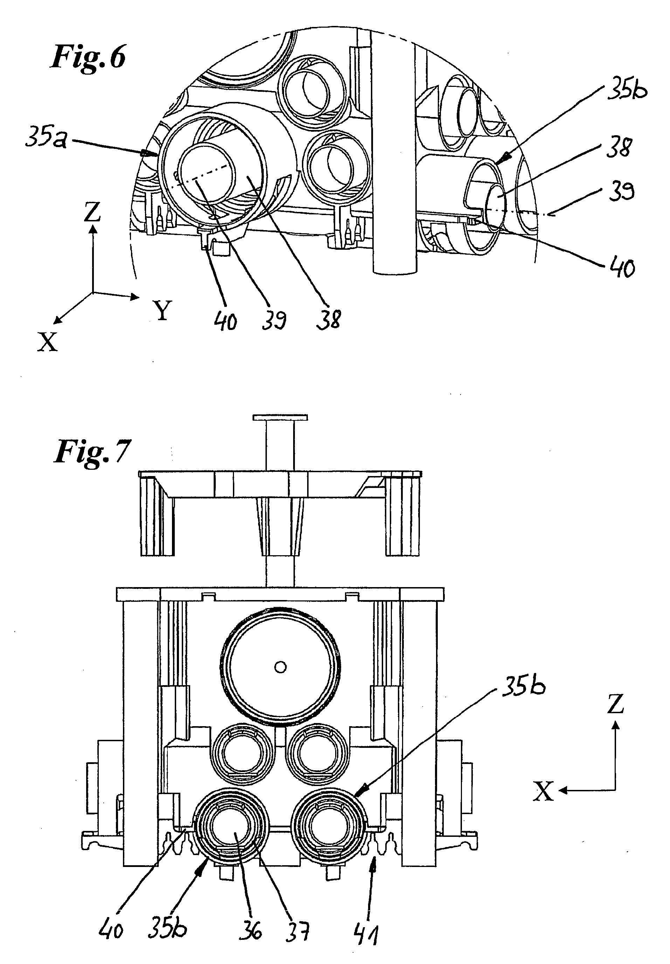

Aus der Figur 5 und insbesondere aus den **Figuren 6 und 7** geht hervor, dass gewisse Muffen 35a, 35b bezüglich einer Muffenachse 39 radial aussenseitig je ein zusätzliches Sicherungselement 40 in Form einer Nase 40 aufweisen, welche als Rödellaschen dienen. Die Muffen sind wie in der EP 1737094 A1 offenbart aufgebaut. Diese Sicherungselemente 40 sind entsprechend den Erfordernissen an die Zugänglichkeit während dem Sichern von ummantelten Wellschläuchen in Umfangsrichtung unterschiedlich ausgerichtet.

Aufgrund einer einteiligen Herstellung als Spritzgussteil sind die Muffen 35a, 35b, 35c und die Sicherungselemente 40 vollständig in der Unterputzdose 4 integriert.

Die Unterputzdose weist vorteilhaft ein rechenartiges Haltemittel 41 zur Aufnahme von Nägeln für die Befestigung der Unterputzdose 4 an der Schalung auf. Alternativ sind die Nägel bereits in den Abstützdomen 7 angeordnet, so dass eine erfindungsgemässe Unterputzdose nur noch mit der Bedienöffnung 6 voran auf ein Schalungselement gelegt werden muss, und durch wenige Schläge auf die vorstehenden Nägelköpfe die Unterputzdose am Schalungselement montiert ist.

Das anhand einer Unterputzdose erklärte Prinzip lässt sich problemlos auf Mehrfacheinlasskasten, Deckendübel und dergleichen übertragen und entsprechend realisieren.

### Bezugszeichenliste

- 1: Deckelsystem
- 2: Adapter
- 3: Deckel
- 4: Unterputzdose
- 5: Anschlussraum
- 6: Bedienöffnung
- 7: Abstützdom
- 8: Befestigungsöffnung
- 9: Befestigungsfinger
- 10: Verjüngung
- 11: Quersteg
- 12: Durchgangslöcher
- 13: Querachse
- 14: Aufnahmeöffnung
- 15: hülsenförmiges Befestigungsteil
- 16: Achse
- 17: Längsachse
- 18: Wange
- 19: Mittelteil
- 21: Ausgleichselement
- 22: Ausnehmung
- 23: zungenartiges Federelement
- 24: Schlitz
- 25: Stützmittel/Rippe
- 26: Mantelfläche
- 27: schalenartige Wandung / Deckelstück
- 30: Schraubenkopf
- 31: Stehschraube
- 32: Innenfläche
- 33: Schutzdeckel
- 34: Seitenwand
- 35a, 35b, 35c: Muffen
- 36: Durchbruch
- 37: Sollbruchstelle
- 38: Einschlaghülse
- 39: Muffenachse
- 40: Sicherungselement
- 41: Haltemittel

## Patentansprüche

1. Adapter (2) zum Befestigen eines Deckels (3) an einer Unterputzdose (4), mit einem Quersteg (11) mit endseitigen Befestigungsmitteln (9) und einer im Quersteg (11) angeordneten Aufnahmeöffnung (14) zur Aufnahme eines hülsenförmigen Befestigungsteils (15) des Deckels (3), **dadurch gekennzeichnet, dass** der Quersteg (11) mindestens ein zungenartiges Federelement (23) aufweist, welches radial mit dem hülsenförmigen Befestigungsteil (15) des Deckels (3) zusammenwirkt, und dass die endseitigen Befestigungsmittel (9) Befestigungsfinger sind, mit welchen der Adapter (2) in Befestigungsöffnungen der Unterputzdose (4) reibschlüssig befestigbar ist.

2. Adapter gemäss Anspruch 1, **dadurch gekennzeichnet dass** sich das mindestens eine Federelement (23) kreissegmentartig oder kreisringabschnittartig in Umfangsrichtung der Aufnahmeöffnung (14) erstreckt.

3. Adapter gemäss einem der Ansprüche 1 oder 2, **dadurch gekennzeichnet dass** das mindestens eine Federmittel (23) in Richtung einer von der Aufnahmeöffnung (14) definierten Achse (16) radial zumindest teilweise durch mindestens ein Stützmittel (25) stabilisiert ist.

4. Adapter gemäss einem der Ansprüche 1 bis 3, **dadurch gekennzeichnet dass** der Quersteg (11) mindestens ein Ausgleichselement (21) zur Aufnahme von Massabweichungen und/oder Formabweichungen der Unterputzdose (4) aufweist.

5. Adapter gemäss einem der Ansprüche 1 bis 4, **dadurch gekennzeichnet dass** der Adapter (2) einteilig ist.

6. Deckelsystem (1) mit einem Adapter (2) gemäss einem der Ansprüche 1 bis 5 sowie einem Deckel (3).zum Verschliessen einer Unterputzdose (4), wobei ein hülsenförmiges Befestigungsteil (15) innenseitig an einer schalenartigen Wandung (27) zum Verschliessen der Unterputzdose (4) angeordnet ist, **dadurch gekennzeichnet, dass** das hülsenförmige Befestigungsteil (15) einen kreisringförmigen Querschnitt mit mindestens einer Verjüngung (10) aufweist, welche als Sollbruchstelle und/oder als Schneidmittelführung ausgebildet ist.

7. Deckelsystem (1) gemäss Anspruch 6, **dadurch gekennzeichnet dass** der Deckel (3) einteilig ist.

8. Deckelsystem gemäss Anspruch 6 oder 7, **dadurch gekennzeichnet dass** der Adapter (2) über eine auftrennbare, insbesondere brechbare, reissbare, oder schneidbare Verbindung mit dem Deckel (3) verbunden ist.

9. Unterputzdose (4) mit einem über eine Bedienöffnung (6) zugänglichen Anschlussraum (5), wobei sich der Anschlussraum (5) von der Bedienöffnung (6) her pyramidenartig abgestuft in die Unterputzdose (4) hinein erstreckt, **dadurch gekennzeichnet, dass** die Unterputzdose (4) eckseitig vier Abstützdome (7) zur Aufnahme von Nägeln aufweist, sowie im Bereich der Abstützdome (7) bedienöffnungsseitig je eine schlitzförmige Befestigungsöffnung (8), welche zur Aufnahme eines entsprechend geformten Befestigungsfingers (9) des Adapters (2) dient.

10. Unterputzdose (4) gemäss Anspruch 9, **dadurch gekennzeichnet, dass** sie Haltemittel (41) zur Aufnahme von Befestigungsnägeln aufweist, insbesondere einen Nagelrechen (41) oder Abstützdome (7).

11. Unterputzdose (4) gemäss Anspruch 9 oder 10, **dadurch gekennzeichnet, dass** sie mindestens eine Muffe (35a, 35b) mit einem Sicherungselement (40) aufweist, mit welchem ein Wellrohr an der Muffe (35a, 35b) fixierbar ist.

## Claims

1. Adapter (2) for fastening a lid (3) to a flush-mounted box (4), comprising a cross-member (11) having fastening means (9) at the ends thereof and a receiving opening (14) arranged in the cross-member (11) for receiving a sleeve-shaped fastening part (15) of the lid (3), **characterised in that** the cross-member (11) comprises at least one tongue-type spring element (23) which radially cooperates with the sleeve-shaped fastening part (15) of the lid (3), and **in that** the fastening means (9) at the ends of the cross-member are fastening fingers, by means of which the adapter (2) can be fastened in a frictionally engaged manner in fastening openings of the flush-mounted box (4).

2. Adapter according to claim 1, **characterised in that** the at least one spring element (23) extends in the manner of a circle segment or annulus portion in the circumferential direction of the receiving opening (14).

3. Adapter according to either claim 1 or claim 2, **characterised in that** the at least one spring means (23) is radially stabilised at least in part, by means of at least one support means (25), in the direction of an axis (16) defined by the receiving opening (14).

4. Adapter according to any of claims 1 to 3, **characterised in that** the cross-member (11) comprises at least one compensating element (21) for accommodating variations in size and/or variations in shape of the flush-mounted box (4).

5. Adapter according to any of claims 1 to 4, **characterised in that** the adapter (2) is formed in one piece.

6. Lid system (1) comprising an adapter (2) according to any of claims 1 to 5, and a lid (3) for closing a flush-mounted box (4), a sleeve-shaped fastening part (15) being arranged on the inner side of a shell-type wall (27) for closing the flush-mounted box (4), **characterised in that** the sleeve-shaped fastening part (15) has an annular cross section having at least one tapering (10) which is configured as a predetermined breaking point and/or as a guide for a cutting means.

7. Lid system (1) according to claim 6, **characterised in that** the lid (3) is formed in one piece.

8. Lid system according to either claim 6 or claim 7, **characterised in that** the adapter (2) is connected to the lid (3) by means of a separable, more particularly breakable, tearable or cuttable connection.

9. Flush-mounted box (4) comprising a connection compartment (5) which can be accessed via a control opening (6), the connection compartment (5) extending in steps in the manner of a pyramid from the control opening (6) into the flush-mounted box (4), **characterised in that** the flush-mounted box (4) comprises four support domes (7) in the corners thereof for receiving nails, and, in the region of each of the support domes (7), comprising a slot-shaped fastening opening (8) at the control opening side, said fastening opening being used to receive a correspondingly shaped fastening finger (9) of the adapter (2).

10. Flush-mounted box (4) according to claim 9, **characterised in that** it comprises retaining means (41) for receiving fastening nails, more particularly a rake-shaped nail retainer (41) or support domes (7).

11. Flush-mounted box (4) according to either claim 9 or claim 10, **characterised in that** it comprises at least one bushing (35a, 35b) comprising a securing element (40) by means of which a corrugated tube can be fixed to the bushing (35a, 35b).

## Revendications

1. Adaptateur (2), destiné à la fixation d'un couvercle (3) sur une boîte de dérivation encastrée (4) avec une traverse (11) avec des moyens de fixation (9) côté extrémité et une ouverture de réception (14) disposée dans la traverse (11) et destinée à recevoir une partie de fixation (15) en forme de douille du couvercle (3), **caractérisé en ce que** la traverse (11) présente au moins un élément de ressort (23) de type languette qui coopère radialement avec la partie de fixation (15) en forme de douille du couvercle (3), et **en ce que** les moyens de fixation (9) côté extrémité sont des doigts de fixation avec lesquels l'adaptateur (2) peut être fixé par liaison par friction dans des ouvertures de fixation de la boîte de dérivation encastrée (4).

2. Adaptateur selon la revendication 1, **caractérisé en ce que** l'au moins un élément de ressort (23) s'étend dans la direction circonférentielle de l'ouverture de réception (14) à la façon d'un segment de cercle ou à la façon d'un tronçon d'anneau circulaire.

3. Adaptateur selon une des revendications 1 ou 2, **caractérisé en ce que** l'au moins un moyen de ressort (23), dans la direction d'un axe (16) défini par l'ouverture de réception (14), est stabilisé radialement au moins partiellement par au moins un moyen d'appui (25).

4. Adaptateur selon une des revendications 1 à 3, **caractérisé en ce que** la traverse (11) présente au moins un élément de compensation (21) destiné à recevoir des écarts de dimension et/ou des écarts de forme de la boîte de dérivation encastrée (4).

5. Adaptateur selon une des revendications 1 à 4, **caractérisé en ce que** l'adaptateur (2) est en une partie.

6. Système de couvercle (1) avec un adaptateur (2) selon une des revendications 1 à 5, ainsi qu'un couvercle (3) pour la fermeture d'une boîte de dérivation encastrée (4), une partie de fixation (15) en forme de coque étant disposée côté intérieur sur une paroi (27) de type coque pour la fermeture de la boîte de dérivation encastrée (4), **caractérisé en ce que** la partie de fixation (15) en forme de coque présente une section transversale en forme d'anneau circulaire avec au moins un rétrécissement (10) qui est constitué en tant qu'emplacement de rupture et/ou en tant que guidage pour moyen de coupe.

7. Système de couvercle selon la revendication 6, **caractérisé en ce que** le couvercle (3) est en une partie.

8. Système de couvercle selon la revendication 6 ou 7, **caractérisé en ce que** l'adaptateur (2) est raccordé au couvercle (3) par le biais d'un raccordement qui peut être séparé, en particulier qui peut être cassé, déchiré ou coupé.

9. Boîte de dérivation encastrée (4) avec un espace de connexion (5) accessible par le biais d'une ouverture de service (6), l'espace de connexion (5) s'étendant à l'intérieur de la boîte de dérivation encastrée (4) de façon étagée à la manière d'une pyramide à partir de l'ouverture de service (6), **caractérisée en ce que** la boîte de dérivation encastrée (4) présente, côté angles, quatre dômes d'appui (7) destinés à recevoir des clous, ainsi que, dans la zone des dômes d'appui (7), respectivement une ouverture de fixation (8) en forme de fente côté ouverture de service qui sert à recevoir un doigt de fixation (9) de l'adaptateur (2) formé en conséquence.

10. Boîte de dérivation encastrée (4) selon la revendication 9, **caractérisée en ce qu'**elle présente des moyens de retenue (41) destinés à recevoir des clous de fixation, en particulier une grille à clous (41) ou des dômes d'appui (7).

11. Boîte de dérivation encastrée (4) selon la revendication 9 ou 10, **caractérisée en ce qu'**elle présente au moins un manchon (35a, 35b) avec un élément de blocage (40) avec lequel un tube ondulé peut être fixé sur le manchon (35a, 35b).
